# EUROPEAN PATENT APPLICATION

(11) **EP 4 746 156 A1**
(43) Date of publication of application: **20.05.2026**
(21) Application number: 24213361.9
(22) Date of filing: 15.11.2024
(51) Int. Cl.: H01M 50/249, H01M 50/262, H01M 50/271, H01M 50/24

(54) **BATTERY SYSTEM WITH INLAY ELEMENT PROVIDING DUAL-SEALING**

(71) Applicant: Samsung SDI Co., Ltd., Yongin-si, Gyeonggi-do 17084 (KR)
(72) Inventor: Bauer, Manuel, 8434 Tillmitsch (AT)
(74) Representative: Gulde & Partner

(57) **Abstract**

The present disclosure refers to A battery system (100), including a battery housing (10, 110) including a frame (14, 114) and a cover plate (16, 116) disposed on the frame (14, 114) and having an accommodation chamber (11, 111) defined by the frame (14, 114) and the cover plate (16, 116), wherein a tunnel (20, 120) extends through the frame (14, 114) from a first end of the accommodation chamber (11, 111) to a second end of the accommodation chamber (11, 111) such that a circumferential wall (22, 122) of the tunnel (20, 120) delimits the tunnel (20, 120) from the accommodation chamber (11, 111), wherein the tunnel (20, 120) is adapted to receive a fastening element extending through the tunnel (20, 120) to fasten the battery system (100) to a carrying structure of a vehicle; a plurality of battery cells (12, 112) accommodated within the accommodation chamber (11, 111), and an inlay element (30, 130) including a sleeve portion (32, 132) and a collar portion (34, 134) at one end of the sleeve portion (32, 132), wherein a through-hole (36, 136) extends through the inlay element (30, 130), wherein the inlay element (30, 130) is disposed at the frame (14, 114) with its sleeve portion (32, 132) extending into the tunnel (20, 120) of the frame (14, 114) and the collar portion (34, 134) outside of the tunnel (20, 120) and abutting a surface of the cover plate (16, 116), wherein the sleeve portion (32, 132) includes a sleeve seal (33, 133) encircling an outer surface of the sleeve portion (32, 132) and sealing the sleeve portion (32, 132) to an inner surface of the tunnel (20, 120); and wherein the collar portion (34, 134) includes a first collar seal (35, 135) at a side of the collar portion (34, 134) abutting the surface of the cover plate (16, 116), the first collar seal (35, 135) surrounding an opening (18, 118a, 118b) of the cover plate (16, 116) and sealing the collar portion (34, 134) to the cover plate (16, 116).

## Description

### Field of the Disclosure

Embodiments of the present disclosure relate to a battery system and an electric vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

Large battery systems face structural problems due to their length and width. A particular problem in the development of such battery systems is to ensure sufficient stability in a battery pack. Therefore, additional fastening means such as screw mounts in the middle of the battery pack and extending through the battery pack may need to be provided. Such additional fastening means, however, may lead to a new problem, namely introducing potential places where water or other contaminants might enter the battery pack from the outside and cause safety issues. In other words, there might be a tightness or sealing problem.

It is therefore an object of the invention to overcome these problems, for example to provide a battery system that provides sufficient stability of the battery system while protecting the battery cells inside the battery system from water or other contaminants.

### Summary of Invention

The present disclosure is defined by the appended claims and their equivalents. The description that follows is subjected to this limitation. Any disclosure lying outside the scope of said claims and their equivalents is only intended for illustrative as well as comparative purposes.

According to one aspect of the present disclosure, a battery system is provided including a battery housing including a frame and a cover plate disposed on the frame and having an accommodation chamber defined by the frame and the cover plate; wherein a tunnel extends through the frame from a first end of the accommodation chamber to a second end of the accommodation chamber such that a circumferential wall of the tunnel delimits the tunnel from the accommodation chamber, wherein the tunnel is adapted to receive a fastening element extending through the tunnel to fasten the battery system to a carrying structure of a vehicle; a plurality of battery cells accommodated within the accommodation chamber, and an inlay element including a sleeve portion and a collar portion at one end of the sleeve portion, wherein a through-hole extends through the inlay element, wherein the inlay element is disposed at the frame with its sleeve portion extending into the tunnel of the frame and the collar portion outside of the tunnel and abutting a surface of the cover plate, wherein the sleeve portion includes a sleeve seal encircling an outer surface of the sleeve portion and sealing the sleeve portion to an inner surface of the tunnel; and wherein the collar portion includes a first collar seal at a side of the collar portion abutting the surface of the cover plate, the first collar seal surrounding an opening of the cover plate and sealing the collar portion to the cover plate.

The collar portion may be disposed outside of the cover plate abutting an outer surface of the cover plate such that the first collar seal surrounds the opening of the cover plate and seals the collar portion to the cover plate from the outer surface of the cover plate, and wherein the collar portion presses the cover plate against the frame.

The sleeve portion may be connected to the tunnel via a threaded connection.

The collar portion and the frame may include mounting holes aligned with each other and the opening of the cover plate, wherein a mounting element extends through the opening of the cover plate and the mounting holes into the frame mounting the cover plate and inlay element to the frame.

The collar portion and the frame each may include first mounting holes aligned with each other and with a first opening of the cover plate, wherein a first mounting element extends through the first opening of the cover plate and the first mounting holes into the frame, and wherein the collar portion and the frame each include second mounting holes aligned with each other and with a second opening of the cover plate, wherein a second mounting element extends through the second opening of the cover plate and the second mounting holes into the frame, wherein the first mounting holes and the first opening are disposed at a first distance from the tunnel in a first direction and the second mounting holes and the second opening are disposed at a second distance from the tunnel in a second direction, wherein the first collar seal is surrounding both the first opening and the second opening of the cover plate and sealing the collar portion to the cover plate.

The collar portion may be disposed inside of the cover plate between the cover plate and the frame, the collar portion abutting an inner surface of the cover plate such that the first collar seal surrounds the opening of the cover plate and seals the collar portion to the cover plate from the inner surface of the cover plate.

The collar portion may include a second collar seal at a side of the collar portion abutting the surface of the frame, the second collar seal surrounding the mounting holes and sealing the collar portion to the frame.

The cover plate may be any one of: a top cover plate, a bottom cover plate.

The frame may include a crossbeam which includes the tunnel and the mounting hole.

The sleeve seal may include one or more sealing rings.

The first collar seal may include a sprayed-on gasket.

Yet another aspect of the present disclosure refers to an electric vehicle including the battery system according to the present disclosure.

Another aspect of the present disclosure refers to the electric vehicle including the carrying structure and the fastening element extending through the tunnel of the frame of the battery system so as to fasten the battery system to the carrying structure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic perspective view of an inlay element of a battery system according to a first embodiment.
FIG. 2 illustrates a schematic cross-sectional view of the battery system according to the first embodiment with the inlay element.
FIG. 3 A, B illustrate schematic perspective views of an inlay element of a battery system according to a second embodiment.
FIG. 4 illustrates a schematic perspective view of the battery system according to the second embodiment with the inlay element.
FIG. 5 illustrates a schematic cross-sectional view of the battery system according to the second embodiment with the inlay element.
FIG. 6 illustrates a schematic perspective view of a carrying structure of an electric vehicle.
FIG. 7 illustrates a schematic cross-sectional view of the carrying structure of FIG. 6.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an aspect of the present disclosure, a battery system is provided. The battery system includes a battery housing including a frame and a cover plate, for example at least one cover plate. The cover plate may be a top cover plate and/or a bottom cover plate. That is, two cover plates may be provided, one top cover plate and one bottom cover plate. The cover plate may be disposed on the frame. Inside the battery housing, and thus inside an inner space formed by the frame and the cover plate(s), an accommodation chamber is defined which accommodates a plurality of battery cells. In other words, the accommodation chamber is defined by the frame and the cover plate. Thus, the battery system includes a plurality of battery cells, for example prismatic, pouch type or cylindrical battery cells. The battery cells may be arranged to form one or more battery packs.

The frame of the battery system forms part of a carrier framework of the battery system. The cover plate may also form part of this carrier framework. As explained above, the carrier framework carries or supports the battery cells. It provides a structural connection to a carrying structure of a vehicle in which the battery system may be mounted/installed. In other words, the frame may be an integral structure of the battery housing which provides structural rigidity to the battery housing, wherein the frame may include beams extending in a horizontal and/or vertical plane and rigidly joined support means to support the cover plate of the battery housing.

A tunnel, or passage, extends through the frame and through the accommodation chamber which is disposed inside the frame. The tunnel extends from a first, e.g. lower, end of the accommodation chamber to a second, e.g. upper, end of the accommodation chamber. In other words, the tunnel has a first opening at a first end surface of the frame, extends from the first opening through the frame up to a second opening at a second end surface of the frame. The tunnel has a circumferential wall that delimits the tunnel from the accommodation chamber. The tunnel thereby provides a sealed passage. In other words, the frame includes a (vertical) beam extending through the accommodation chamber and connecting a first side of the frame with a second side of the frame, wherein inside the beam the tunnel is formed. The tunnel is adapted to receive a fastening element to fasten the battery system to the carrying structure of the vehicle. That is, the tunnel is formed such that it may accommodate the fastening element, for example a screw or bolt, extending through the tunnel. For example, a cross-section or diameter of the tunnel may correspond to a cross-section or diameter of the fastening element. The fastening element may fasten the frame, and thus the battery system, to the carrying structure of the vehicle.

The battery system further includes an inlay element which is arranged partly inside the tunnel. The inlay element includes a sleeve portion and a collar portion, the collar portion being disposed at one end of the sleeve portion. The sleeve portion is the part of the inlay element arranged inside the tunnel. In other words, the inlay element is disposed at the frame with its sleeve portion extending into the tunnel of the frame. The collar portion is disposed outside of the tunnel and abutting a surface of the cover plate. The collar portion may abut an outer surface of the frame surrounding the tunnel entrance as well or may press the cover plate onto the frame as explained below. A through-hole extends through the inlay element. That is, the through-hole extends through both the collar portion and the sleeve portion. The through-hole is adapted to receive the fastening element to fasten the battery system to the carrying structure of the vehicle. The inner surface of the tunnel may include a recess in which the sleeve portion of the inlay element may be received. The cross-section of the through-hole of the inlay element may correspond to or be substantially the same as the cross-section of the tunnel. The inlay element thus forms a bushing or socket for the fastening element.

The sleeve portion includes a sleeve seal encircling an outer surface of the sleeve portion. For example, the sleeve seal may include one or more sealing rings, for example O-rings. If two or more sealing rings are provided, they may be distanced in an axial direction of the sleeve portion for redundancy. The sleeve seal seals the sleeve portion, and thus the inlay element, to an inner surface of the tunnel. That is, the sleeve seal prevents that water or other contaminants can come between, or seep in, the outer surface of the sleeve portion of the inlay element and the inner surface of the tunnel thereby preventing that water or other contaminants can enter the battery housing and the accommodation chamber via this way.

The collar portion includes a first collar seal which is disposed at a side of the collar portion abutting the surface of the cover plate. As mentioned above, the collar portion of the inlay element abuts with one side thereof the cover plate. At this side, the first collar seal of the collar portion is arranged. The first collar seal is disposed such that it surrounds an opening of the cover plate and thereby seals the collar portion to the cover plate. That is, the cover plate includes an opening. The opening of the cover plate may be aligned with the tunnel of the frame and may thus, in conjunction with the tunnel and the through-hole of the inlay element, form part of the passage through the accommodation chamber. Alternatively, the opening of the cover plate may be a mounting opening via which the cover plate may be fastened to the frame at a different position than the tunnel as explained below. The first collar seals the collar portion, and thus the inlay element, to a surface of the cover plate. That is, the first collar seal prevents that water or other contaminants can come between, or seep in, the collar portion and the cover plate thereby preventing that water or other contaminants can enter the battery housing and the accommodation chamber via this way.

In summary, the battery system according to the present disclosure includes an inlay element which provides a dual-sealing: A first sealing via the sleeve seal which prevents that water or other contaminants can enter the accommodation chamber via the tunnel and a second sealing via the first collar seal that prevents that water or other contaminants can enter the accommodation chamber via the cover plate. Thus, the battery system may be fastened to the carrying structure of a vehicle via a fastening element extending through the tunnel while providing protection for the battery cells. That is, the battery system according to the present disclosure, via the inlay element, fixes the problem that water or other external or environmental influences might enter the battery pack and cause safety issues. Thus, the battery system according to the present disclosure allows for sufficient stability of the battery system, due to the tunnel adapted to receive the fastening element, while protecting the battery cells inside the battery system from external or environmental influences via the inlay element with its dual-sealing. In other words, the present disclosure provides an inlay element with sealings, i.e. the first collar seal and the sleeve seal, and without the necessity of pre-coated fine-threads to ensure a tight battery pack despite the use of screws extending through the battery which may be necessary in a large battery pack.

The inlay element may additionally act as a tolerance compensator. That is, the connection between the cover plate and the frame, specifically between the bottom cover, frame and top cover (if both covers are provided) may be prone to large tolerances and therefore the tightness problem may be larger issue. The inlay element may overcome this issue because it acts as an adaptor or compensator which widens the surface where the battery system can be sealed and hence ensures a closed-off accommodation chamber despite the tunnel.

According to an embodiment, the collar portion is disposed outside of the cover plate abutting an outer surface of the cover plate such that the first collar seal surrounds the opening of the cover plate and seals the collar portion to the cover plate from the outer surface of the cover plate, and wherein the collar portion presses the cover plate against the frame. The collar portion being disposed outside of the cover plate means that (a section of) the cover plate extends in-between the collar portion and the frame. In this embodiment, the surface of the cover plate which the collar portion of the inlay element abuts is an outer surface of the cover plate, i.e. the surface facing away from the frame. In this embodiment, the opening of the cover plate may be aligned with the tunnel and may thus, in conjunction with the tunnel and the through-hole of the inlay element, form the passage through the accommodation chamber. The inlay element may have rotational symmetry with a symmetry axis extending centrally through the through-hole. Thus, in this embodiment, the first collar seal seals the collar portion to the cover plate from the outer surface of the cover plate. The collar portion is pressed against cover plate and thus presses the cover plate, which is disposed between the frame and the cover plate, against the frame. Fastening means may be provided to achieve this pressing. Thereby the first collar seal may prevent water or other contaminants from coming in between the outer surface of the cover plate and the collar portion and thus from entering the accommodation chamber and reaching the battery cells. Such an inlay element may provide for a simple and efficient sealing.

A simple and efficient sealing may be achieved, if the opening of the cover plate is aligned with the tunnel and the inlay element is inserted with the sleeve portion into the tunnel and the collar portion abutting the outer surface of the cover plate. According to an embodiment, the sleeve portion is connected to the tunnel via a threaded connection. For example, the sleeve portion may include an external thread screwed into an internal thread of the frame, specifically into an internal thread of the tunnel. That is, the tunnel may include an internal thread and the sleeve portion of the inlay element an external thread. The inlay element may thus be screwed, via the sleeve portion, into the tunnel of the frame thereby fastening the inlay element and the cover plate, which is disposed between the frame and the cover plate, to the frame. This allows for a simple and efficient mounting of the inlay element and, at the same time, the cover plate to the frame. There is thus no need for additional fastening means or screws.

According to an embodiment, the collar portion and the frame include mounting holes aligned with each other and the opening of the cover plate, wherein a mounting element extends through the opening of the cover plate and the mounting holes into the frame mounting the cover plate and inlay element to the frame. That is, each of the collar portion and frame includes a mounting hole aligned with, or overlapping, the opening of the cover plate. In other words, the frame may include a first mounting hole and the collar portion may include a second mounting hole, wherein the first mounting hole, the second mounting hole and the opening of the cover plate are aligned with each other. The mounting holes and opening are aligned with each other such that a mounting element, such as a screw or bolt, can be inserted through the opening of the cover plate, through the mounting hole of the collar portion and into the mounting hole of the frame. Thereby, the cover plate and inlay element are mounted, or fastened, to the frame. The mounting hole of the frame may include an internal thread and the mounting element, e.g. a screw, an external thread so that the mounting element may be screwed into the mounting hole of the frame. In the present embodiment, the opening of the cover plate is not aligned with the tunnel but rather forms a mounting opening via which the cover plate may be mounted, or fastened, to the frame at a different position than the tunnel. This embodiment may provide for an inlay element that is securely fastened to the frame while providing sufficient sealing against water and other contaminants. Even when water or contaminants were to enter along the mounting element through the opening of the cover plate, the path in-between the cover plate and the collar portion into the accommodation chamber is blocked.

The battery system may include multiple of such mounting means, for example two. That is, the frame may include multiple mounting holes, for example at opposite sides from the tunnel. The collar portion of the inlay element may include correspondingly two mounting holes, each aligned with one of the mounting holes of the frame. Correspondingly, the cover plate may include two openings, each aligned with one of the mounting holes of the frame and of the collar portion. That is, according to an embodiment, the collar portion and the frame each include first mounting holes aligned with each other and with a first opening of the cover plate, wherein a first mounting element extends through the first opening of the cover plate and the first mounting holes into the frame, and wherein the collar portion and the frame each include second mounting holes aligned with each other and with a second opening of the cover plate, wherein a second mounting element extends through the second opening of the cover plate and the second mounting holes into the frame, wherein the first mounting holes and the first opening are disposed at a first distance from the tunnel in a first direction and the second mounting holes and the second opening are disposed at a second distance from the tunnel in a second direction, wherein the first collar seal is surrounding both the first opening and the second opening of the cover plate and sealing the collar portion to the cover plate. The first distance may be the same as the second distance. The first direction may be different than the second direction, in particular opposite. In other words, the frame may include two mounting holes at its surface on different sides from the tunnel. The collar portion may include corresponding openings and the cover plate corresponding mounting holes. Mounting the cover plate onto the frame on two opposite sides of the tunnel may provide an improved structural stability. The first collar seal, in this embodiment, is disposed such that it surrounds both the openings in the cover plate, i.e. both the first opening and the second opening of the cover plate. The first collar seal may thus provide a secure sealing preventing water or other contaminants from entering the accommodation chamber from in between the cover plate and the collar portion of the inlay element.

According to an embodiment, the collar portion is disposed inside of the cover plate between the cover plate and the frame, the collar portion abutting an inner surface of the cover plate such that the first collar seal surrounds the opening of the cover plate and seals the collar portion to the cover plate from the inner surface of the cover plate. The cover plate and the collar portion (and thus the inlay element) are mounted to the frame via the above-explained one or more mounting elements extending through the one or more mounting holes and openings. The one or more mounting elements may thus press the cover plate onto the collar portion and both the cover plate and the collar portion onto the frame.

According to an embodiment, the collar portion includes a second collar seal at a side of the collar portion abutting the surface of the frame, the second collar seal surrounding the mounting holes and sealing the collar portion to the frame. Thus, in this embodiment the collar portion of the inlay element includes two collar seals, one at each surface. In other words, the collar portion includes the first collar seal on the surface of the collar portion that faces the cover plate and the second collar seal on the surface of the collar portion that faces the frame. Here, the collar portion is disposed between the cover plate and the frame. The second collar seal also seals off a possible path between the frame and the collar portion. That is, even when water or contaminants were to enter along the mounting element through the opening of the cover plate and the mounting hole of the collar portion, the path in-between the collar portion and the frame into the accommodation chamber by the second collar seal is blocked.

According to an embodiment, the cover plate is any one of: a top cover plate, a bottom cover plate. As mentioned above, the cover plate may be either a top cover plate or a bottom cover plate. Also, the battery housing may include both a top cover plate and a bottom cover plate. The embodiments disclosed herein apply to both the top cover plate and the bottom cover plate if both are present.

According to an embodiment, the frame includes a crossbeam which includes the tunnel and the mounting hole. That is, the tunnel may be formed in/through the crossbeam, wherein the crossbeam extends through the accommodation chamber. Also, the one or more mounting holes for mounting the inlay element to the frame may be disposed inside the crossbeam. The collar portion of the inlay element may expand over the edges of the crossbeam such that a sealing surface or the first collar seal is broader than the crossbeam. Thereby, the tunnel opening of the frame, which may be relatively wide compared to the relatively narrow width of the crossbeam, can be sealed without having to broaden the crossbeam which would be disadvantageous regarding the energy density of the battery pack.

According to an embodiment, the sleeve seal includes one or more sealing rings. As mentioned above, the sleeve seal may include one or more O-rings. If two or more sealing rings are provided, they may be distanced in an axial direction of the sleeve portion for redundancy. This provides for a secure sealing between the inner surface of the tunnel and the outer surface of the sleeve portion.

According to an embodiment, the first collar seal includes or consists of a spray-on gasket. In other words, the first collar seal may be formed via spray-on or may be sprayed-on. Spraying on the first collar seal may be a simple way of providing the first collar seal. The second collar seal, if present, may be provided in the same manner.

The disclosure also pertains to an electric vehicle including a battery system according to the disclosure, i.e. a battery system as explained above.

According to an embodiment, the electric vehicle includes a carrying structure and a fastening element, wherein the fastening element extends through the tunnel of the frame of the battery system so as to fasten the battery system to the carrying structure. The fastening element thereby also extends through the through-hole of the inlay element. The battery system may thus be securely fastened to the carrying structure while maintaining a secure seal protecting the battery cells from water or other contaminants.

### Specific Embodiments

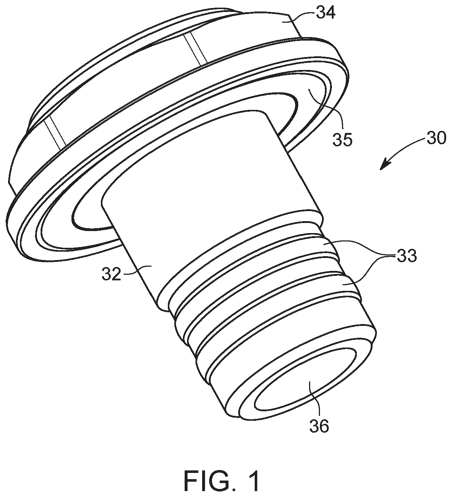

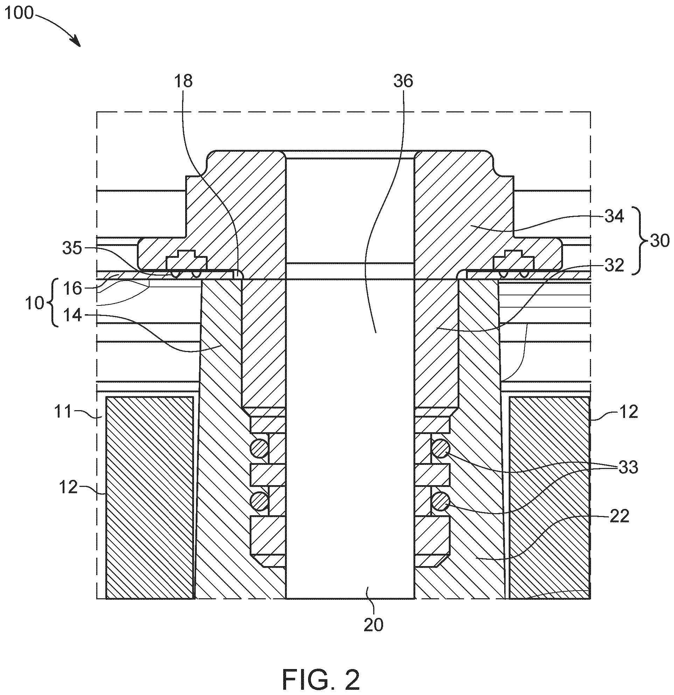

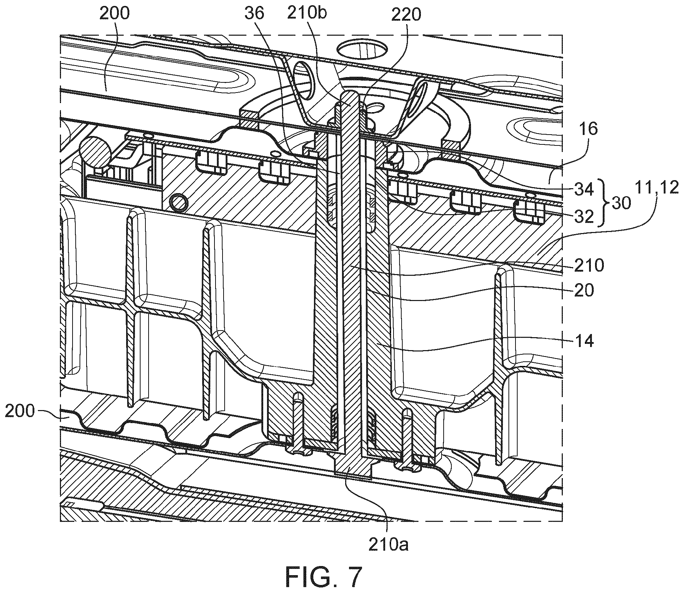

FIG. 1 and 2 pertain to a battery system 100 according to a first embodiment of the present disclosure. FIG. 1 illustrates a schematic perspective view of an inlay element 30 of a battery system 100. FIG. 2 shows part of the battery system 100 in a cross-section. The battery system 100 includes a battery housing 10 enclosing an accommodation chamber 11 inside of which a plurality of battery cells 12 are arranged. The battery housing 10 includes a frame 14 and a cover plate 16 disposed on the frame 14, wherein the accommodation chamber 11 is defined by the frame 14 and the cover plate 16. The cover plate 16 may be a top cover plate. The frame 14 forms part of a carrier framework of the battery system 100 via which the battery system 100 may be fastened to a carrying structure 200 of an electric vehicle (see FIG. 7).

The frame 14 includes a tunnel 20 extending through the frame 14 from an upper end of the battery system 100 to a lower end (not shown) of the battery system 100. The part of the frame 14 including the tunnel 20 may be a (cross)beam which may separate neighboring battery cells 12. The tunnel 20 extends completely through the battery system 100 and thus also through the accommodation chamber 11, i.e. from a first end to a second end of the accommodation chamber 11. The tunnel 20 is delimited from the accommodation chamber 11 via a circumferential wall 22 of the tunnel 20.

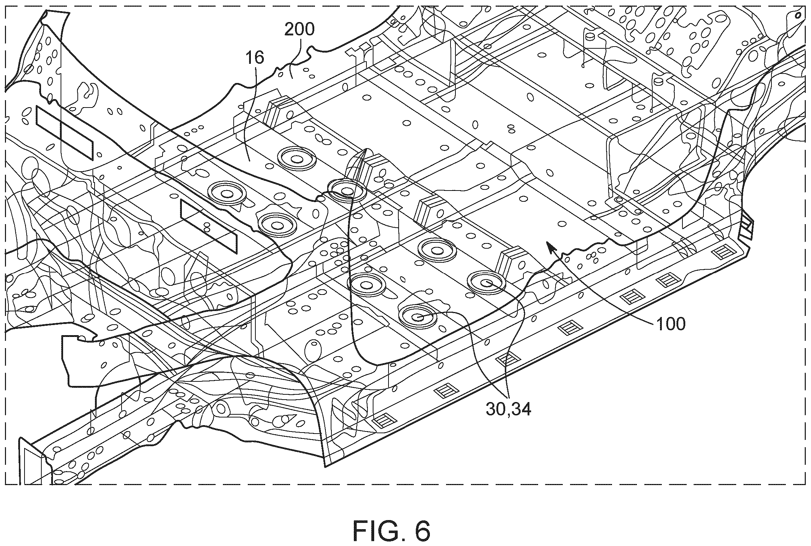

The tunnel 20 is adapted to receive a fastening element 210 which may extend through the tunnel 20 to fasten the battery system 100 to the carrying structure 200 of the electric vehicle, see FIG. 7. FIG. 6 illustrates a schematic perspective view of the carrying structure 200 of the vehicle and of the battery system 100 disposed therein. FIG. 7 shows a cross-sectional view through the carrying structure 200 of FIG. 6 and through the battery system 100 disposed therein. As shown, the fastening element 210 extends through the tunnel 20, wherein at the bottom end of the tunnel 20 a head 210a of the fastening element 210 abuts against a lower part of the carrying structure 200 and wherein at the top end of the tunnel 20 an end 210b of the fastening element 210 is fastened to an upper part of the carrying structure 200 via a nut 220. Thereby the battery system 100 is fastened/fixed to the carrying structure 200.

The battery system 100 further includes an inlay element 30 which is shown in a perspective view in FIG. 1 in a first embodiment. The inlay element 30 includes a sleeve portion 32 and a collar portion 34 at an end of the sleeve portion 32. A through-hole 36 extends through the inlay element 30, i.e. through both the sleeve portion 32 and the collar portion 34 as can be seen in FIG. 2. In the assembled state of the battery system 100, the inlay element 30 is disposed at the frame 14 with its sleeve portion 32 extending into the tunnel 20 of the frame 14 and the collar portion 34 outside of the tunnel 20 and abutting an outer surface of the cover plate 16.

The sleeve portion 32 includes a sleeve seal 33 encircling an outer surface of the sleeve portion 32 and sealing the sleeve portion 32 to an inner surface of the tunnel 20. The sleeve seal 33 may include two sealing rings distanced in an axial direction of the sleeve portion 32 as shown in FIG. 2. The collar portion 34 includes a first collar seal 35 at a side of the collar portion 34 abutting the outer surface of the cover plate 16, wherein the first collar seal 35 surrounds an opening 18 of the cover plate 16 and seals the collar portion 34 to the cover plate 16.

The inlay element 30 may, via the collar portion 34, press the cover plate 16 against the frame 14. This may be achieved, for example, via a threaded connection (not-shown) between the sleeve portion 32 and the tunnel 20. For example, the sleeve portion 32 may include an external thread screwed into an internal thread of the tunnel 20.

The inlay element 30 provides the battery system 100 with a dual-sealing. That is, a first sealing is provided via the sleeve seal 33 which prevents that water or other contaminants can enter the accommodation chamber 11 from the tunnel 20 by flowing in-between the outer surface of the sleeve portion 32 and the inner surface of the tunnel 20. Further, a second sealing is provided via the first collar seal 35 which prevents that water or other contaminants can enter the accommodation chamber 11 by flowing in-between the collar portion 34 and the cover plate 16. Thus, the tunnel 20 provides a fastening means for fastening the battery system to the carrying structure 200 of the vehicle via the fastening element 210 extending through the tunnel 20 while the inlay element 30 ensures protection of the battery cells 12 from water or contaminants.

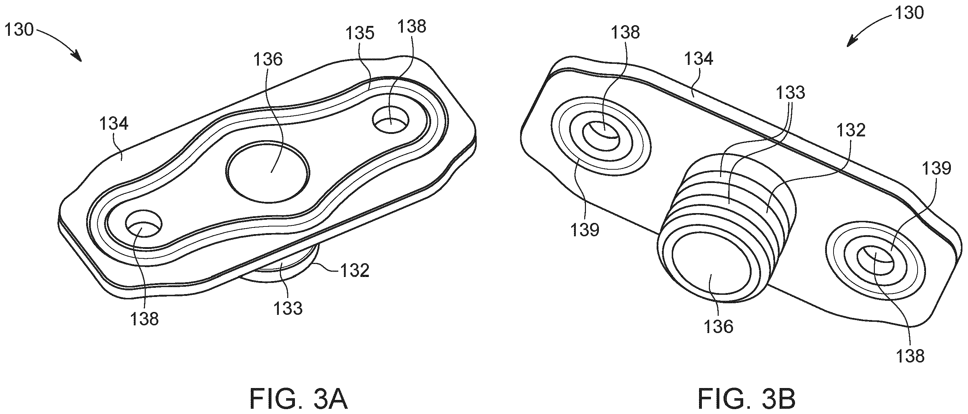

A second embodiment of a battery system 100 is shown in FIG. 3-5. The battery system 100 includes a different embodiment of an inlay element 130.

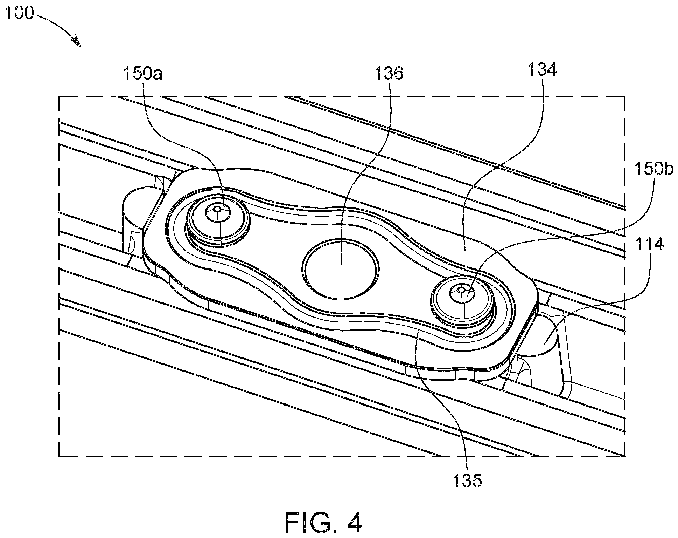

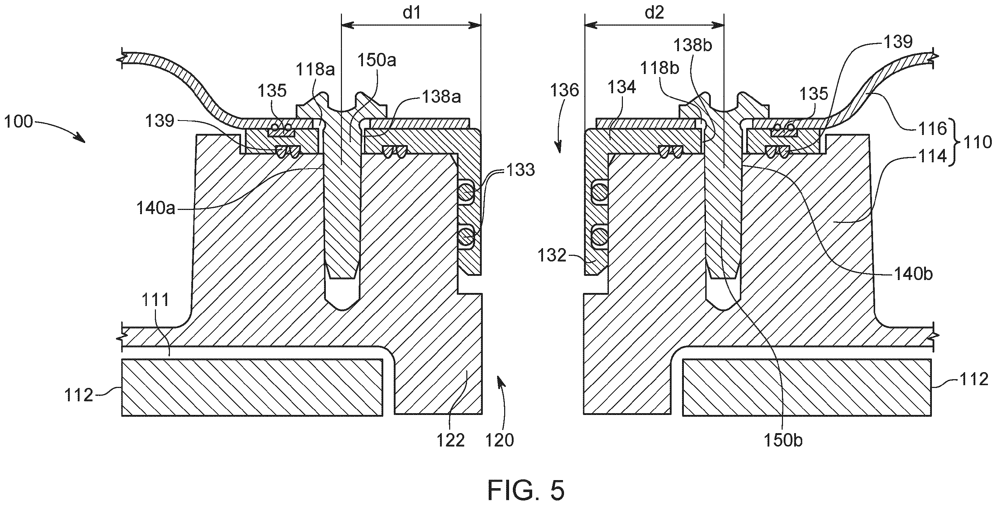

The inlay element 130 is shown alone in FIG. 3A in a perspective top view and in FIG. 3B in a perspective bottom view. FIG. 4 shows the inlay element 130 mounted in the battery system 100 without showing the cover plate. FIG. 5 shows part of the battery system 100 in a cross-sectional view with the cover plate.

The battery system 100 includes a housing 110 enclosing an accommodation chamber 111 inside of which a plurality of battery cells 12 are arranged. The housing 110 includes a frame 114 and a cover plate 116 disposed on the frame 114. The cover plate 116 may be a bottom cover plate. The frame 114 forms part of a carrier framework of the battery system 100 via which the battery system 100 may be fastened to the carrying structure 200 of the electric vehicle (as explained above).

The frame 114 includes a tunnel 120 extending through the frame 114 from an upper end of the battery system 100 to a lower end of the battery system 100. The part of the frame 114 including the tunnel 120 may be a crossbeam which may separate neighboring battery cells 112. The tunnel 120 extends completely through the battery system 100 and thus also through the accommodation chamber 111, i.e. from a first end to a second end of the accommodation chamber 111. The tunnel 120 is delimited from the accommodation chamber 111 via a circumferential wall 122 of the tunnel 120. The tunnel 120 is adapted to receive the fastening element 210 which may extend through the tunnel 120 to fasten the battery system 100 to the carrying structure 200 of the electric vehicle as explained above.

The inlay element 130 includes a sleeve portion 132 and a collar portion 134 at an end of the sleeve portion 132. A through-hole 136 extends through the inlay element 130, i.e. through both the sleeve portion 132 and the collar portion 134 as can be seen in FIG. 3A, 3B. In the assembled state of the battery system 100, the inlay element 130 is disposed at the frame 114 with its sleeve portion 132 extending into the tunnel 120 of the frame 114 and the collar portion 134 outside of the tunnel 120 and abutting an inner surface of the cover plate 116.

The sleeve portion 132 includes a sleeve seal 133 encircling an outer surface of the sleeve portion 132 and sealing the sleeve portion 132 to an inner surface of the tunnel 120. The sleeve seal 133 may include two sealing rings distanced in an axial direction of the sleeve portion 132 as shown in FIG. 3B and 5.

The collar portion 134 includes a first collar seal 135 at a side of the collar portion 134 abutting the inner surface of the cover plate 16. In contrast to the first embodiment, the collar portion 134 is placed between the cover plate 116 and the frame 114 (while in the first embodiment the cover plate 16 is placed between the collar portion 34 and the frame 14). Therefore, the first collar seal 135 of the inlay element 130 is disposed on the upper surface of the inlay element 130 (while in the first embodiment the first collar seal 35 is disposed on the lower surface of the inlay element 30). The first collar seal 135 surrounds two openings 118a, 118b of the cover plate 116 and seals the collar portion 134 to the cover plate 116.

That is, the collar portion 134 and the frame 114 each include first mounting holes 138a, 140a aligned with each other and with a first opening 118a of the cover plate 116. A first mounting element 150a extends through the first opening 118a of the cover plate 116 and the first mounting holes 138a, 140a into the frame 114. The collar portion 134 and the frame 114 further each include second mounting holes 138b, 140b aligned with each other and with a second opening 118b of the cover plate 116, wherein a second mounting element 150b extends through the second opening 118b of the cover plate 116 and the second mounting holes 138b, 140b into the frame 114. The first mounting holes 138a, 140a and the first opening 118a are disposed at a first distance d₁ from the tunnel 120 in a first direction and the second mounting holes 138b, 140b and the second opening 118b are disposed at a second distance d₂ from the tunnel 120 in a second direction opposite the first direction as shown in FIG. 5. The first collar seal 135 is surrounding both the first opening 118a and the second opening 118b of the cover plate 116 and sealing the collar portion 134 to the cover plate 116.

The first and second mounting elements 150a, 150b may be connected to their respective first and second mounting holes 140a, 140b, for example, via threaded connections. For example, the first and second mounting elements 150a, 150b may each include an external thread and may thus be screwed into an internal thread of the first and second mounting holes 140a, 140b, respectively. Thereby, the first and second mounting elements 150a, 150b may press the cover plate 116 and the collar portion 134 against the frame 114.

Furthermore, the inlay element 130 includes two second collar seals 139 at a surface of the collar portion 134 abutting the surface of the frame 114, i.e. at the lower surface of the collar portion 134. The second collar seals 139 surround the first and second mounting holes 140a, 140b of the frame 114 (and the first and second mounting holes 138a, 138b of the frame collar portion 134) and seal the collar portion 134 to the frame 114.

Similar to the first embodiment, the inlay element 130 provides the battery system 100 with a dual-sealing. That is, a first sealing is provided via the sleeve seal 133 which prevents that water or other contaminants can enter the accommodation chamber 111 from the tunnel 120 by flowing in-between the outer surface of the sleeve portion 132 and the inner surface of the tunnel 120. Further, a second sealing is provided via the first collar seal 135 which prevents that water or other contaminants can enter the accommodation chamber 111 by flowing in-between the collar portion 134 and the cover plate 116. Thus, the tunnel 120 provides a fastening means for fastening the battery system to the carrying structure 200 of the vehicle via the fastening element 210 extending through the tunnel 120 while the inlay element 130 ensures protection of the battery cells 112 from water or contaminants (as explained above).

The inlay element 130 provides a triple-sealing via the second collar seals 139 which prevent water or other contaminants entering the accommodation chamber 111 by flowing from the cover plate 116 through the openings 118a, 118b and the mounting holes 138a, 138b and in-between the lower surface of the collar portion 134 and the upper surface of the frame 114.

Therefore, the battery systems according to the present disclosure, via their inlay element, fix the problem that water or other external or environmental influences might enter the battery system and cause safety issues. In other words, the present disclosure provides an inlay element with sealings, i.e. the first collar seal and the sleeve seal, and without the necessity of pre-coated fine-threads to ensure a tight battery pack despite the use of fastening elements extending through the battery system which may be necessary in a large battery pack.

### Reference signs

- 10: battery housing
- 11: accommodation chamber
- 12: battery cells
- 14: frame
- 16: cover plate
- 18: opening in cover plate
- 20: tunnel
- 22: circumferential wall of tunnel
- 30: inlay element
- 32: sleeve portion
- 33: sleeve seal
- 34: collar portion
- 35: first collar seal
- 36: through-hole
- 100: battery system
- 110: battery housing
- 111: accommodation chamber
- 112: battery cells
- 114: frame
- 116: cover plate
- 118a: first opening in cover plate
- 118b: second opening in cover plate
- 120: tunnel
- 122: circumferential wall of tunnel
- 130: inlay element
- 132: sleeve portion
- 133: sleeve seal
- 134: collar portion
- 135: first collar seal
- 138a: first mounting hole
- 138b: second mounting hole
- 139: second collar seal(s)
- 136: through-hole
- 140a: first mounting hole
- 140b: second mounting hole
- 150a: first mounting element
- 150b: second mounting element
- 200: carrying structure
- 210: fastening element
- 210a: head of fastening element
- 210b: end of fastening element
- 220: nut

## Claims

1. A battery system (100), comprising:
a battery housing (10, 110) comprising a frame (14, 114) and a cover plate (16, 116) disposed on the frame (14, 114) and having an accommodation chamber (11, 111) defined by the frame (14, 114) and the cover plate (16, 116); wherein a tunnel (20, 120) extends through the frame (14, 114) from a first end of the accommodation chamber (11, 111) to a second end of the accommodation chamber (11, 111) such that a circumferential wall (22, 122) of the tunnel (20, 120) delimits the tunnel (20, 120) from the accommodation chamber (11, 111), wherein the tunnel (20, 120) is adapted to receive a fastening element (210) extending through the tunnel (20, 120) to fasten the battery system (100) to a carrying structure (200) of a vehicle;
a plurality of battery cells (12, 112) accommodated within the accommodation chamber (11, 111); and
an inlay element (30, 130) comprising a sleeve portion (32, 132) and a collar portion (34, 134) at one end of the sleeve portion (32, 132), wherein a through-hole (36, 136) extends through the inlay element (30, 130), wherein the inlay element (30, 130) is disposed at the frame (14, 114) with its sleeve portion (32, 132) extending into the tunnel (20, 120) of the frame (14, 114) and the collar portion (34, 134) outside of the tunnel (20, 120) and abutting a surface of the cover plate (16, 116),
wherein the sleeve portion (32, 132) comprises a sleeve seal (33, 133) encircling an outer surface of the sleeve portion (32, 132) and sealing the sleeve portion (32, 132) to an inner surface of the tunnel (20, 120); and
wherein the collar portion (34, 134) comprises a first collar seal (35, 135) at a side of the collar portion (34, 134) abutting the surface of the cover plate (16, 116), the first collar seal (35, 135) surrounding an opening (18, 118a, 118b) of the cover plate (16, 116) and sealing the collar portion (34, 134) to the cover plate (16, 116).

2. The battery system (100) as claimed in claim 1, wherein the collar portion (34) is disposed outside of the cover plate (16) abutting an outer surface of the cover plate (16) such that the first collar seal (35) surrounds the opening (18) of the cover plate (16) and seals the collar portion (34) to the cover plate (16) from the outer surface of the cover plate (16), and wherein the collar portion (34) presses the cover plate (16) against the frame (14).

3. The battery system (100) as claimed in claim 1 or 2, wherein the sleeve portion (32) is connected to the tunnel (20) via a threaded connection.

4. The battery system (100) as claimed in any one of the preceding claims, wherein the collar portion (134) and the frame (114) comprise mounting holes (138a, 138b, 140a, 140b) aligned with each other and the opening (118a, 118b) of the cover plate (116), wherein a mounting element (150a, 150b) extends through the opening (118a, 118b) of the cover plate (116) and the mounting holes (138a, 138b, 140a, 140b) into the frame (114) mounting the cover plate (116) and inlay element (130) to the frame (114).

5. The battery system (100) as claimed in claim 4, wherein the collar portion (134) and the frame (114) each comprise first mounting holes (138a, 140a) aligned with each other and with a first opening (118a) of the cover plate (116), wherein a first mounting element (150a) extends through the first opening (118a) of the cover plate (116) and the first mounting holes (138a, 140a) into the frame (114), and wherein the collar portion (134) and the frame (114) each comprise second mounting holes (138b, 140b) aligned with each other and with a second opening (118b) of the cover plate (116), wherein a second mounting element (150b) extends through the second opening (118b) of the cover plate (116) and the second mounting holes (138b, 140b) into the frame (114), wherein the first mounting holes (138a, 140a) and the first opening (118a) are disposed at a first distance (d₁) from the tunnel (120) in a first direction and the second mounting holes (138b, 140b) and the second opening (118b) are disposed at a second distance (d₂) from the tunnel (120) in a second direction, wherein the first collar seal (135) is surrounding both the first opening (118a) and the second opening (118b) of the cover plate (116) and sealing the collar portion (134) to the cover plate (116).

6. The battery system (100) as claimed in claim 4 or 5, wherein the collar portion (135) is disposed inside of the cover plate (116) between the cover plate (116) and the frame (114), the collar portion (134) abutting an inner surface of the cover plate (116) such that the first collar seal (135) surrounds the opening (118a, 118b) of the cover plate (116) and seals the collar portion (134) to the cover plate (116) from the inner surface of the cover plate (116).

7. The battery system (100) as claimed in claim 6, wherein the collar portion (134) comprises a second collar seal (139) at a side of the collar portion (134) abutting the surface of the frame (114), the second collar seal (139) surrounding the mounting holes (138a, 140a, 138b, 140b) and sealing the collar portion (134) to the frame (114).

8. The battery system (100) as claimed in any one of the preceding claims, wherein the cover plate (16, 116) is any one of: a top cover plate, a bottom cover plate.

9. The battery system (100) as claimed in any one of the preceding claims, wherein the frame (14, 114) comprises a crossbeam which comprises the tunnel (20, 120) and/or the mounting holes (140a, 140b).

10. The battery system (100) as claimed in any one of the preceding claims, wherein the sleeve seal (33, 133) comprises one or more sealing rings.

11. The battery system (100) as claimed in any one of the preceding claims, wherein the first collar seal (35, 135) comprises a sprayed-on gasket.

12. An electric vehicle comprising the battery system (100) as claimed in any one of the preceding claims.

13. The electric vehicle as claimed in claim 12, comprising the carrying structure (200) and the fastening element (210) extending through the tunnel (20, 120) of the frame (14, 114) of the battery system (100) so as to fasten the battery system (100) to the carrying structure (200).

## Amended claims

### Amended claims in accordance with Rule 137(2) EPC.

1. A battery system (100), comprising:
a battery housing (10, 110) comprising a frame (14, 114) and a cover plate (16, 116) disposed on the frame (14, 114) and having an accommodation chamber (11, 111) defined by the frame (14, 114) and the cover plate (16, 116); wherein a tunnel (20, 120) extends through the frame (14, 114) from a first end of the accommodation chamber (11, 111) to a second end of the accommodation chamber (11, 111) such that a circumferential wall (22, 122) of the tunnel (20, 120) delimits the tunnel (20, 120) from the accommodation chamber (11, 111), wherein the tunnel (20, 120) is adapted to receive a fastening element (210) extending through the tunnel (20, 120) to fasten the battery system (100) to a carrying structure (200) of a vehicle;
a plurality of battery cells (12, 112) accommodated within the accommodation chamber (11, 111); and
an inlay element (30, 130) comprising a sleeve portion (32, 132) and a collar portion (34, 134) at one end of the sleeve portion (32, 132), wherein a through-hole (36, 136) extends through the inlay element (30, 130), wherein the inlay element (30, 130) is disposed at the frame (14, 114) with its sleeve portion (32, 132) extending into the tunnel (20, 120) of the frame (14, 114) and the collar portion (34, 134) outside of the tunnel (20, 120) and abutting a surface of the cover plate (16, 116),
wherein the sleeve portion (32, 132) comprises a sleeve seal (33, 133) encircling an outer surface of the sleeve portion (32, 132) and sealing the sleeve portion (32, 132) to an inner surface of the tunnel (20, 120); and wherein the collar portion (34, 134) comprises a first collar seal (35, 135) at a side of the collar portion (34, 134) abutting the surface of the cover plate (16, 116), the first collar seal (35, 135) surrounding an opening (18, 118a, 118b) of the cover plate (16, 116) and sealing the collar portion (34, 134) to the cover plate (16, 116),
wherein the collar portion (134) and the frame (114) comprise mounting holes (138a, 138b, 140a, 140b) aligned with each other and the opening (118a, 118b) of the cover plate (116), wherein a mounting element (150a, 150b) extends through the opening (118a, 118b) of the cover plate (116) and the mounting holes (138a, 138b, 140a, 140b) into the frame (114) mounting the cover plate (116) and inlay element (130) to the frame (114), and wherein the mounting holes (138a, 138b, 140a, 140b) are disposed at distances (d1, d2) from the tunnel (120).

2. The battery system (100) as claimed in claim 1, wherein the collar portion (134) and the frame (114) each comprise first mounting holes (138a, 140a) aligned with each other and with a first opening (118a) of the cover plate (116), wherein a first mounting element (150a) extends through the first opening (118a) of the cover plate (116) and the first mounting holes (138a, 140a) into the frame (114), and wherein the collar portion (134) and the frame (114) each comprise second mounting holes (138b, 140b) aligned with each other and with a second opening (118b) of the cover plate (116), wherein a second mounting element (150b) extends through the second opening (118b) of the cover plate (116) and the second mounting holes (138b, 140b) into the frame (114), wherein the first mounting holes (138a, 140a) and the first opening (118a) are disposed at a first distance (d₁) from the tunnel (120) in a first direction and the second mounting holes (138b, 140b) and the second opening (118b) are disposed at a second distance (d₂) from the tunnel (120) in a second direction, wherein the first collar seal (135) is surrounding both the first opening (118a) and the second opening (118b) of the cover plate (116) and sealing the collar portion (134) to the cover plate (116).

3. The battery system (100) as claimed in claim 1 or 2, wherein the collar portion (135) is disposed inside of the cover plate (116) between the cover plate (116) and the frame (114), the collar portion (134) abutting an inner surface of the cover plate (116) such that the first collar seal (135) surrounds the opening (118a, 118b) of the cover plate (116) and seals the collar portion (134) to the cover plate (116) from the inner surface of the cover plate (116).

4. The battery system (100) as claimed in claim 3, wherein the collar portion (134) comprises a second collar seal (139) at a side of the collar portion (134) abutting the surface of the frame (114), the second collar seal (139) surrounding the mounting holes (138a, 140a, 138b, 140b) and sealing the collar portion (134) to the frame (114).

5. The battery system (100) as claimed in any one of the preceding claims, wherein the cover plate (16, 116) is any one of: a top cover plate, a bottom cover plate.

6. The battery system (100) as claimed in any one of the preceding claims, wherein the frame (14, 114) comprises a crossbeam which comprises the tunnel (20, 120) and/or the mounting holes (140a, 140b).

7. The battery system (100) as claimed in any one of the preceding claims, wherein the sleeve seal (33, 133) comprises one or more sealing rings.

8. The battery system (100) as claimed in any one of the preceding claims, wherein the first collar seal (35, 135) comprises a sprayed-on gasket.

9. An electric vehicle comprising the battery system (100) as claimed in any one of the preceding claims.

10. The electric vehicle as claimed in claim 9, comprising the carrying structure (200) and the fastening element (210) extending through the tunnel (20, 120) of the frame (14, 114) of the battery system (100) so as to fasten the battery system (100) to the carrying structure (200).
